# FASCICULE DE BREVET EUROPEEN

(11) **EP 0 614 749 B1**
(45) Date de publication et mention de la délivrance du brevet: **11.06.1997**
(21) Numéro de dépôt: 94870034.9
(22) Date de dépôt: 23.02.1994
(51) Int. Cl.: B29C 47/88

(54) **Procédé et dispositif pour refroidir un tuyau lors de sa fabrication par extrusion à l'aide de dispersions successives d'un liquide sur la paroi interne**
Verfahren und Vorrichtung zur Kühlung eines Rohres während seiner Extrusion durch Zerstäubung einer Flüssigkeit an der Innenwand
Process and apparatus for cooling an extruded pipe by spraying a fluid on the internal surface

(30) Priorité: 24.02.1993 BE 9300171
(43) Date de publication de la demande: 14.09.1994
(73) Titulaire: Kabelwerk Eupen AG Cablerie d'Eupen SA Kabelfabriek Eupen NV, B-4700 Eupen (BE)
(72) Inventeur: Pelzer, Rudolf, D-52134 Herzogenrath (DE)
(74) Mandataire: Overath, Philippe

(56) Documents cités:
- EP-A- 0 197 647
- EP-A- 0 209 933
- DE-A- 2 257 899
- DE-A- 3 241 005
- US-A- 4 329 314
- US-A- 4 708 841
- PATENT ABSTRACTS OF JAPAN vol. 1, no. 139 (E-064)15 Novembre 1977 & JP-A-52 076 691 (FURUKAWA DENKI KOGYO K.K.) 28 Juin 1977

## Description

La présente invention se rapporte à un procédé et un dispositif pour refroidir la paroi interne d'un tuyau en matière plastique lors de son extrusion.

La fabrication moderne de tuyaux en matière plastique par extrusion demande des extrudeuses à débit élevé. Pour produire toutefois, en grande quantité, des tuyaux de haute qualité, il est impératif que les tuyaux soient refroidis lors de leur extrusion de la manière la plus intensive et la plus efficace possible.

Le refroidissement classique par jet d'eau sur la surface externe ne convient plus, étant donné que le refroidissement est limité par la longueur du parcours de refroidissement. Or la chaleur à éliminer dépend également de l'épaisseur de la paroi du tuyau et de la vitesse d'extrusion.

On a donc cherché une solution se basant sur un refroidissement par l'intérieur du tuyau. Des propositions basées sur l'utilisation de l'air ou de l'eau à contre-courant ou basées sur un refroidissement indirect donnent des résultats peu satisfaisants.

Le refroidissement interne par dispersion d'eau s'avère plus prometteur. A cet effet de petites gouttelettes d'eau sont projetées, sous forme de brouillard, sur la paroi interne du tuyau. Du point de vue de la transmission thermique, la projection de gouttelettes représente une bonne solution, étant donné que la quantité de chaleur nécessaire pour la vaporisation de l'eau (chaleur latente) et donc la chaleur à prélever du tuyau à refroidir, est environ cinq fois supérieure à la quantité de chaleur sensible qui est dégagée par l'eau dans un processus convectif.

Diverses variantes de ce type de refroidissement sont décrites dans les demandes de brevets allemandes DE-A 2455779, DE-A 3241005 et DE-A 3414029. Suivant ces variantes, le réfrigérant est projeté sous forme de gouttelettes via un dispositif fixe comportant un orifice central ou plusieurs orifices répartis sur la circonférence. Le dispositif est disposé de manière stationnaire et est fixe par rapport au tube qui se déplace axialement.

Il a été trouvé que ce système de refroidissement comporte des inconvénients et imperfections.

En effet, un phénomène important intervenant dans le refroidissement de tuyaux provient de la conduction de la chaleur de la matière constituante. Or le coefficient de conductibilité thermique des matières plastiques est faible. Il en résulte que la chaleur se trouvant à la surface ou près de la surface sera facilement enlevée, mais que la chaleur se trouvant plus en profondeur dans le tuyaux a besoin d'un laps de temps pour atteindre la surface. Une projection de gouttelettes telle que proposée par l'état de la technique ne permet qu'à enlever la chaleur de la surface du tuyau.

En plus, si une pellicule d'eau est pulvérisée sur la paroi chaude du tuyau extrudé, une partie de l'eau est vaporisée mais la plus grande partie de l'eau dispersée s'écoule de la paroi du tuyau vers le bas et converge dans cette région. Cette eau ne contribue plus que dans cette région au refroidissement interne du tuyau. Le refroidissement du tuyau reste asymétrique. Par ailleurs, il a été remarqué que les gouttelettes d'eau dispersées sur un tuyau en matière plastique gardent leur forme, étant donné que le mouillage entre l'eau et la matière plastique est mauvais, ceci surtout lorsqu'on utilise le polyéthylène à haute densité. Ce phénomène freine également l'efficacité du refroidissement à l'aide de gouttelettes dispersées.

La présente invention a pour objet de remédier à ces inconvénients et de proposer un procédé et un dispositif permettant un refroidissement amélioré de la paroi interne d'un tuyau extrudé.

Suivant l'invention, cet objectif est atteint en dispersant à plusieurs reprises successives, à intervalles de temps donnés, un réfrigérant sur la surface de la paroi interne du tuyau.

Ainsi, on parvient à faire intervenir dans le processus de refroidissement l'élément de temps; la chaleur à l'intérieur de la paroi du tuyau a le temps d'atteindre la surface après que la chaleur près de la surface ait été enlevée. En dispersant plusieurs fois successivement la même surface, les inconvénients résultant de l'état de la technique sont surmontés.

Suivant un procédé et dispositif avantageux, le réfrigérant est dispersé au moyen d'un dispositif qui se déplace à l'intérieur du tuyau extrudé suivant un mouvement axial de va-et-vient, voire un mouvement d'oscillation.

Suivant une forme de mise en application préférentielle, le réfrigérant est dispersé suivant un mouvement de rotation.

L'invention sera décrite plus en détail ci-après à l'aide d'un exemple de mise en application, en se référant aux figures jointes qui représentent:
- la figure 1 : une coupe longitudinale schématique d'un exemple de réalisation de l'invention;
- la figure 2 : une coupe suivant la ligne X-X de la figure 1.
- la figure 3 : une coupe schématique d'un injecteur de dispersion rotative.

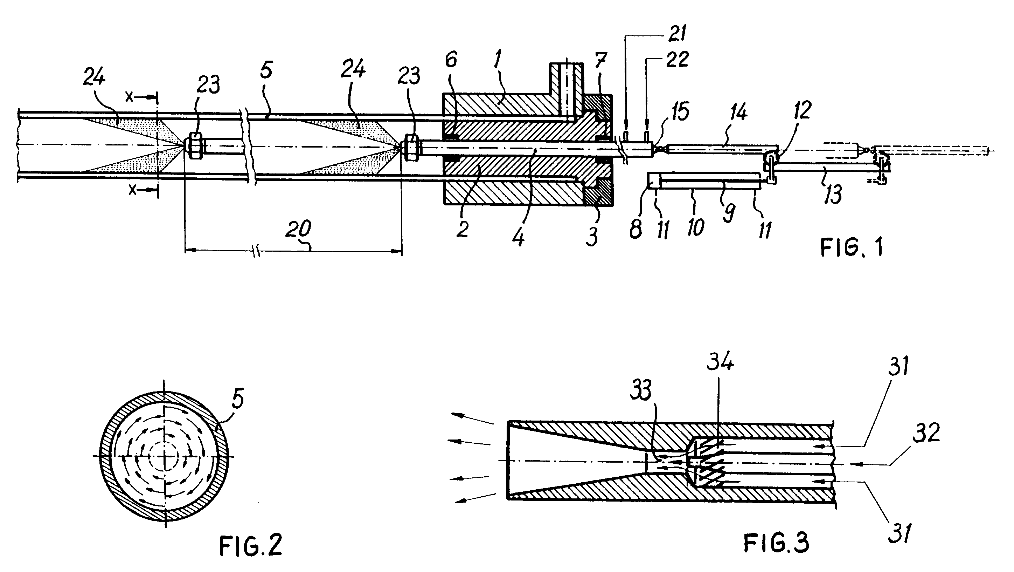

En se référant à la figure 1, celle-ci montre une tête d'injection 1 dont le mandrin 2 et son support 3 présentent un alésage central par lequel un tube de dispersion 4 est introduit. Ce tube se trouve donc à l'intérieur du tuyau extrudé 5. L'alésage central comporte une boîte de glissement antérieure 6 et une boîte de glissement postérieure 7 pouvant guider sans frottement le tube de dispersion 4 lors de mouvements d'oscillation de celui-ci. L'étanchéité de l'alésage central autour du tube 4 ne doit pas être parfaite, elle doit uniquement empêcher un reflux de l'air propulseur, utilisé pour disperser le réfrigérant, vers l'arrière. Donc une garniture à labyrinthe placée dans la boîte de glissement postérieure 7 pourra convenir.

Le mouvement d'oscillation du tube de dispersion 4 peut être produit de différentes manières. Suivant l'exemple, un piston pneumatique 8 actif dans les deux directions, muni d'une tige 9, se déplace dans un cylindre 10 comportant aux deux extrémités une admission d'air 11.

La tige 9 du piston porte un pignon 12 qui roule entre une crémaillère fixe 13 et une crémaillère 14, entraînée par le pignon 12, pouvant se déplacer et s'étendant axialement à l'extrémité postérieure 15 du tube 4 et solidaire de celui-ci. La vitesse du piston sera de préférence réglable, de façon que le déplacement vers la gauche (sur le dessin), causant un déplacement du tube 4 à l'intérieur du tuyau extrudé 5 en direction de l'évacuation du tuyau (phase active), puisse être ajusté.

En effet, la vitesse de déplacement du tube 4 détermine le nombre d'oscillations et donc l'efficacité du refroidissement du tuyau.

La course du piston 8 en direction opposée (vers la droite sur le dessin), causant un déplacement du tube 4 à l'intérieur du tuyau extrudé en direction de la tête d'injection 1 (phase inactive), peut être effectuée très rapidement.

La vitesse de déplacement du tube 4 peut être réglée par divers moyens, une solution simple est d'équiper les admissions d'air 11 d'étranglements dimensionnés.

Ainsi, on peut régler la vitesse de déplacement du tube pendant la phase active, en fonction de l'épaisseur de la paroi du tuyau extrudé, du type de matière plastique utilisé et du débit d'extrusion.

Ce sont ces paramètres qui définissent en gros la quantité de chaleur à évacuer. La course du tube 4 pendant la phase inactive est de préférence aussi courte que possible.

Un exemple pourra illustrer les considérations au sujet de la vitesse de déplacement du tube 4:

### Extrusion d'un tuyau en polyéthylène haute densité.

Pour un débit d'extrusion de 200 kg/h et d'un tuyau d'un diamètre extérieur de 160 mm et d'une épaisseur de paroi de 9,5 mm, la vitesse d'extrusion est de 750 mm/min. Si on cherche à évacuer par un refroidissement interne 50% de la chaleur émise par la paroi au-delà de 100°C, il faudra évacuer pour une température de sortie (du tuyau) de l'extrudeuse de 200°C et une chaleur spécifique du polyéthylène haute densité de 0,6 Kcal/kg, environ 6000 Kcal/h. Avec une chaleur de vaporisation de l'eau (à 15°C) de 590 Kcal/kg, il faudra une quantité d'eau à évaporer d'environ 10 kg/h.
En partant du principe que chaque partie de la surface de la paroi du tuyau doit être aspergée 10 fois (à intervalles successives) et que la course d'oscillation effective du tube 4 est de 750 mm (ref. 20 sur le dessin) et qu'on règle la vitesse (de la phase active) du tube à 7500 mm/min, il faudra 10 courses par minute (pour autant qu'on néglige le temps de la course retour - phase inactive).

Retournant vers la figure 1, les références 21 et 22 représentent respectivement l'admission du réfrigérant, en général de l'eau, et l'admission d'air utilisé comme gaz propulseur du réfrigérant.

Le tube 4 comporte sur son extrémité avant (côté opposé de la crémaillère 14) un injecteur, gicleur ou pulvérisateur 23. La figure montre les deux positions extrêmes du tube pendant le refroidissement (position complètement avancée et position de retrait). Suivant une forme avantageuse de mise en application de l'invention, l'injecteur est construit de façon à produire un cône rotatif de gouttelettes dispersées. L'avantage d'une rotation des gouttelettes dispersées résulte du fait que le réfrigérant forme des gouttelettes fines et extrêmement fines qui produisent un mouillage direct et indirect de la paroi à refroidir. Par suite de la force centrifugale les gouttelettes fines s'écoulent contre la paroi, tandis que les gouttelettes extrêmement fines forment dans l'air propulseur un brouillard qui afflue axialement sur une longue distance (principe du cyclone). La dispersion par l'injecteur et la rotation du cône donnent donc un double refroidissement, un refroidissement direct par les gouttelettes et un refroidissement secondaire occasionné par le brouillard.

La figure 2 illustre la circulation du réfrigérant dans le cône 24 de projection.

En se référant à la figure 3, celle-ci montre en détail un exemple d'injecteur produisant un cône rotatif. Il comporte au centre un conduit 32 pour l'air propulseur (air primaire) entouré d'un conduit 31 pour amener le réfrigérant avec l'air secondaire, les deux conduits se terminent dans une partie ayant une forme de tuyère 33. L'injecteur comporte dans l'extrémité des conduits 31 et 32, juste avant la tuyère 33, des aubes 34 produisant un cône rotatif de gouttelettes dispersées. Les conduits 31 et 32 sont reliés avec les admissions 21 et 22 (fig. 1) et comportent pour l'admission 21 du réfrigérant une pompe de dosage (non représentée) permettant de régler la quantité nécessaire du réfrigérant. L'injecteur est conçu de façon qu'il puisse être introduit dans ou extrait du mandrin sans problème.

Il est clair que l'invention n'est pas limitée à l'exemple décrit. Tout système de dispersion ou de pulvérisation d'un réfrigérant à l'intérieur d'un tuyau extrudé qui donne lieu à des dispersions successives, de façon qu'on disperse le réfrigérant sur la paroi et dès que le réfrigérant est évaporé, on disperse à nouveau du réfrigérant sur la paroi, donne l'effet recherché par l'invention.

Ce but pourra être atteint par tout système de dispersion d'un réfrigérant à l'intérieur d'un tuyau extrudé, qui peut se déplacer suivant un mouvement axial de va-et-vient. Tous ces systèmes rentrent dans le cadre de l'invention.

Il est avantageux mais pas indispensable que l'injecteur soit équipé de moyens donnant un cône de dispersion rotatif.

Il est évident que le système de refroidissement décrit se combinera de préférence avec un refroidissement conventionnel du tuyau extrudé.

## Revendications

1. Procédé pour refroidir un tuyau en matière plastique lors de sa fabrication par extrusion à l'aide d'un réfrigérant qui agit au moins partiellement sur la surface interne de la paroi (5) du tuyau, caractérisé en ce qu'on disperse le réfrigérant à plusieurs reprises successives et à des intervalles de temps donnés.

2. Procédé suivant la revendication 1, caractérisé en ce que le réfrigérant est de l'eau.

3. Procédé suivant la revendication 1, caractérisé en ce que le réfrigérant est dispersé au moyen d'une tuyère ou injecteur.

4. Procédé suivant la revendication 1, caractérisé en ce qu'on projeté un réfrigérant sur la surface interne de la paroi d'un tuyau et, dès que ce réfrigérant est au moins partiellement évaporé, on projette à nouveau du réfrigérant sur ladite surface, et ainsi de suite.

5. Procédé suivant la revendication 1, caractérisé en ce qu'on disperse le réfrigérant au moyen d'un système qui se déplace à l'intérieur du tuyau suivant un mouvement axial de va-et-vient.

6. Procédé suivant la revendication 1, caractérisé en ce qu'on disperse le réfrigérant au moyen d'un injecteur donnant un cône rotatif de gouttelettes dispersées.

7. Procédé suivant la revendication 1, caractérisé en ce qu'on refroidit le tuyau, en même temps, à l'aide d'un réfrigérant qui agit sur la surface extérieure du tuyau.

8. Dispositif de refroidissement d'un tuyau en matière plastique lors de sa fabrication par extrusion à l'aide d'un réfrigérant qui est dispersé sur la surface interne de sa paroi (5) au moyen d'un injecteur (23), caractérisé en ce que l'injecteur est monté sur un tube (4) qui se déplace axialement à l'intérieur du tuyau (5) suivant un mouvement de va-et-vient.

9. Dispositif suivant la revendication 8, caractérisé en ce que l'injecteur (23) est équipé de moyens donnant un cône rotatif (24) de gouttelettes dispersées.

10. Dispositif suivant la revendication 8, caractérisé en ce que le mouvement de va-et-vient est réalisé au moyen d'un piston (8) se déplaçant dans un cylindre (10), et actif dans les deux directions, et qui est solidaire d'un pignon (12) qui roule entre une crémaillère fixe (13) et une crémaillère (14), entraînée par le pignon, solidaire du tube (4) portant l'injecteur (23).

11. Dispositif suivant la revendication 8, caractérisé en ce que la vitesse de la course du tube (4) est réglable.

12. Dispositif suivant la revendication 8, caractérisé en ce que la dispersion du réfrigérant a lieu substantiellement lors des phases d'avancement du tube (4) dans le tuyau (5) et que les phases de retrait de ce tube se font rapidement.

## Claims

1. Process for cooling a plastic pipe during its manufacture by extrusion with the aid of a refrigerant which acts at least partially on the internal surface of the wall (5) of the pipe, characterized in that the refrigerant is dispersed in several successive repeats at given time intervals.

2. Process according to Claim 1, characterized in that the refrigerant is water.

3. Process according to Claim 1, characterized in that the refrigerant is dispersed by means of a nozzle or injector.

4. Process according to Claim 1, characterized in that a refrigerant is sprayed onto the internal surface of the wall of a pipe and, as soon as this refrigerant has at least partially evaporated, refrigerant is sprayed once again onto the said surface, and so on.

5. Process according to Claim 1, characterized in that the refrigerant is dispersed by means of a system which moves inside the pipe with an axial to-and-fro motion.

6. Process according to Claim 1, characterized in that the refrigerant is dispersed by means of an injector giving a rotating cone of dispersed droplets.

7. Process according to Claim 1, characterized in that the pipe is cooled at the same time using a refrigerant which acts on the external surface of the pipe.

8. Apparatus for cooling a plastic pipe during its manufacture by extrusion with the aid of a refrigerant which is dispersed on the internal surface of its wall (5) by means of an injector (23), characterized in that the injector is mounted on a tube (4) which moves axially inside the pipe (5) with a to-and-fro motion.

9. Apparatus according to Claim 8, characterized in that the injector (23) is equipped with means giving a rotating cone (24) of dispersed droplets.

10. Apparatus according to Claim 8, characterized in that the to-and-fro motion is produced by means of a piston (8) which moves in a cylinder (10), and is active in both directions, and which is fastened to a pinion (12) which runs between a fixed rack (13) and a rack (14), driven by the pinion, fastened to the tube (4) bearing the injector (23).

11. Apparatus according to Claim 8, characterized in that the speed of travel of the tube (4) can be adjusted.

12. Apparatus according to Claim 8, characterized in that the dispersion of the refrigerant takes place substantially during the phases when the tube (4) is advancing in the pipe (5) and in that the phases when this tube is being drawn back take place rapidly.

## Patentansprüche

1. Verfahren zum Kühlen eines Rohrs aus Kunststoffmaterial bei dessen Herstellung durch Extrusion mit Hilfe eines Kühlmittels, welches wenigstens zum Teil auf die Innenoberfläche der Wand (5) des Rohrs wirkt, dadurch gekennzeichnet, daß das Kühlmittel in mehreren aufeinanderfolgenden Wiederholungen und zu gegebenen Zeitintervallen verteilt wird.

2. Verfahren nach Anspruch 1, dadurch gekennzeichnet, daß das Kühlmittel Wasser ist.

3. Verfahren nach Anspruch 1, dadurch gekennzeichnet, daß das Kühlmittel mittels einer Düse oder eines Injektors verteilt wird.

4. Verfahren nach Anspruch 1, dadurch gekennzeichnet, daß ein Kühlmittel auf die Innenoberfläche der Wand eines Rohrs gespritzt wird und, sobald das Kühlmittel zumindest teilweise verdampft ist, erneut Kühlmittel auf diese Oberfläche gespritzt wird und so fort.

5. Verfahren nach Anspruch 1, dadurch gekennzeichnet, daß das Kühlmittel mittels eines Systems verteilt wird, welches sich im Inneren des Rohrs in einer axialen Hin-und-Her-Bewegung verlagert.

6. Verfahren nach Anspruch 1, dadurch gekennzeichnet, daß das Kühlmittel mittels eines Injektors verteilt wird, welcher einen Rotationskegel verteilter Tröpfchen bildet.

7. Verfahren nach Anspruch 1, dadurch gekennzeichnet, daß das Rohr gleichzeitig mit Hilfe eines Kühlmittels gekühlt wird, welches auf die Außenoberfläche des Rohrs wirkt.

8. Vorrichtung zur Kühlung eines Rohrs aus Kunststoffmaterial bei dessen Herstellung durch Extrusion mit Hilfe eines Kühlmittels, welches mittels eines Injektors (23) auf der Innenoberfläche der Wand (5) verteilt wird, dadurch gekennzeichnet, daß der Injektor an einer Röhre (4) angebracht ist, welche sich im Inneren des Rohrs (5) in einer Hin-und-Her-Bewegung axial verlagert.

9. Vorrichtung nach Anspruch 8, dadurch gekennzeichnet, daß der Injektor (23) mit Mitteln versehen ist, welche einen Rotationskegel (24) verteilter Tröpfchen bilden.

10. Vorrichtung nach Anspruch 8, dadurch gekennzeichnet, daß die Hin-und-Her-Bewegung mittels eines Kolbens (8) ausgeführt wird, welcher sich in einem Zylinder (10) verlagert, in beide Richtungen wirkt und mit einem Zahnrad (12) verbunden ist, welches zwischen einer festen Zahnstange (13) und einer durch das Zahnrad angetriebenen Zahnstange (14) rollt, welche mit der den Injektor (23) tragenden Röhre (4) verbunden ist.

11. Vorrichtung nach Anspruch 8, dadurch gekennzeichnet, daß die Geschwindigkeit der Bewegung der Röhre (4) einstellbar ist.

12. Vorrichtung nach Anspruch 8, dadurch gekennzeichnet, daß das Verteilen des Kühlmittels im wesentlichen während der Vorwärtsbewegungsphasen der Röhre (4) in dem Rohr (5) stattfindet und daß die Rückwärtsbewegungsphasen der Röhre schnell stattfinden.
